(19) **Europäisches Patentamt**

**European Patent Office**

**Office européen des brevets**

(11) **EP 1 304 875 B1**

(12) **EUROPEAN PATENT SPECIFICATION**

(45) Date of publication and mention
of the grant of the patent:
**15.03.2006 Bulletin 2006/11**

(51) Int Cl.:
**H04N 5/445** (2006.01)

(21) Application number: **02021273.4**

(22) Date of filing: **19.09.2002**

(54) **Electronic program guide apparatus, method and system**

Vorrichtung, Verfahren und System für eine elektronische Programmführung

Appareil, méthode et système de guide électronique de programmes

(84) Designated Contracting States:
**DE FR GB**

(30) Priority: **21.09.2001   JP 2001288965**

(43) Date of publication of application:
**23.04.2003   Bulletin 2003/17**

(73) Proprietor: **Pioneer Corporation
Meguro-ku,
Tokyo (JP)**

(72) Inventors:
• **Horiuchi, Naoaki
  Saitama 350-2288 (JP)**
• **Kaji, Masayo
  Saitama 350-2288 (JP)**

(74) Representative: **Klingseisen, Franz et al
Patentanwälte,
Dr. F. Zumstein,
Dipl.-Ing. F. Klingseisen,
Postfach 10 15 61
80089 München (DE)**

(56) References cited:
**EP-A- 1 037 461          WO-A-01/60064
WO-A-01/67752**

EP 1 304 875 B1

**Description**

BACKGROUND OF THE INVENTION

1. Field of the Invention

The present invention relates to a broadcast program guiding apparatus according to the preamble of claim 1, and method according to the preamble of claim 9.

2. Description of the Related Background Art

WO-A-0167752 specifies a method and an apparatus for displaying available television programs, wherein program feature information indicating the program features are stored, a history information indicating programs of interest to a particular user is obtained, and an indication of the numerical recommendation scores associated with each program is displayed to the user.

WO-A-0160064 specifies a program guide system, which builds a profile of viewer tastes.

EP-A-10037461 specifies a program guide display comprising numerical shapes, each split into a plurality of segments representing particular time intervals, program/channel information, control parameter information or the like.

A viewer usually reads broadcast program listings in a newspaper or a broadcast program guide magazine to select the television programs the viewer wants to watch. Some Internet sites offer radio and television program guides on their web pages, so that a viewer can view such program guides via the viewer's terminal, such as a personal computer. In addition, digital television broadcasting provides a viewer with an electronic program guide (EPG) together with television programs. Therefore, by using a television set that can receive digital television broadcasts, the viewer can select the EPG and display it on the television screen by remote control.

On a display monitor such as a television, the EPG or a program table are displayed in the same form as that of program listings in a newspaper. However, when there are many broadcast channels, it is impossible to display the program tables of all the channels on one screen, so that a viewer has to scroll the program table of each broadcast channel to select a program the viewer wants to watch. For this reason, it is difficult to select a program matching a viewer's tastes.

SUMMARY OF THE INVENTION

Therefore, it is an object of the present invention to provide a broadcast program guiding apparatus, and a broadcast program guiding method and a system in which the apparatus is used, for clearly showing recommendable programs corresponding to a viewer's tastes in a simple way.

Said object is achieved by the characterising features of claims 1 and 9.

According to the present invention, there is provided a broadcast program guiding apparatus comprising: program feature storing means for storing program feature information indicating the program features for each broadcast program; viewer's tastes detecting means for obtaining history information indicating programs which a viewer has watched or which is recorded by the viewer, and for detecting taste information indicating program selections of the viewer based on the history information; recommendation value setting means for setting a recommendation value for each broadcast program in a predetermined time period in accordance with matching states between the program feature information for each broadcast program stored in the program feature storing means and the taste information detected by the viewer's taste detecting means; and display data creating means for detecting a position on a screen which is an angular position corresponding to a broadcast time with respect to a reference line passing through a reference point as a center point and which is separated from the reference point by a distance corresponding to the recommendation value for each broadcast program, and for creating display data for displaying a program title at the detected position of each broadcast program.

According to the present invention, there is provided a broadcast program guiding method comprising: the steps of storing program feature information indicating the program features for each broadcast program; obtaining history information indicating programs which a viewer has watched or which is recorded by the viewer, and detecting taste information indicating program selections of the viewer based on the history information; setting a recommendation value for each broadcast program in a predetermined time period in accordance with matching states between the stored program feature information for each broadcast program and the detected taste information; and detecting a position on a screen which is an angular position corresponding to a broadcast time with respect to a reference line passing through a reference point as a center point and which is separated from the reference point by a distance corresponding to the recommendation value for each broadcast program, and creating display data for displaying a program title at the detected position of each broadcast program.

BRIEF DESCRIPTION OF THE DRAWINGS

Fig. 1 is a block diagram of an embodiment of a broadcast program guiding system according to the present invention;
Fig. 2 is a block diagram of the configuration of the broadcast program guiding apparatus in the system in Fig. 1;
Fig. 3 shows an exemplary recommendation value calculation result;
Fig. 4 is a flow chart showing the recommendable program display operation;
Fig. 5 shows an exemplary display of a recommendable program guide;
Fig. 6 is a flowchart showing the operation of the broadcast program guiding apparatus when a shift key is pressed;
Fig. 7 shows an exemplary display of a recommendable program guide when a + shift key is pressed;
Fig. 8 is a flowchart showing the operation of the broadcast program guiding apparatus when a future key or a past key is pressed;
Fig. 9 shows an exemplary display of a recommendable program guide when the future key is pressed;
Fig. 10 is a flowchart showing the creation of display data for a program content indicator of a recommendable program guide; and
Fig. 11 shows an exemplary application of a recommendable program guide display.

DETAILED DESCRIPTION OF THE PREFERRED EMBODIMENTS

The embodiments of the present invention will be described in detail with reference to the accompanying drawings.

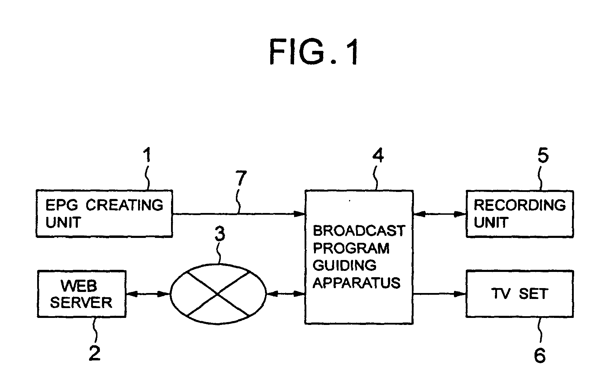

Fig. 1 shows the general configuration of a broadcast program guiding system according to the present invention. The system comprises an EPG creating unit 1, a web server 2, the Internet 3, a broadcast program guiding apparatus 4, an image recording unit 5, and a television (TV) set 6. The EPG creating unit 1 and the web server 2 are installed in a broadcasting station, an EPG producing company, or a publishing company of a program information magazine, for example.

The EPG creating unit 1 regularly creates EPG data for a predetermined period of time, such as one week, and has a receiving/transmitting function that sends the EPG data to the broadcast program guiding apparatus 4 in response to an EPG data request from a terminal that includes the broadcast program guiding apparatus 4, via a line 7 such as a telephone line, a cable television line, etc. The web server 2 stores a program table for each television broadcast channel as web data including a HTML (hypertext markup language) file in a database, searches and reads the web data corresponding to a television broadcast channel specified by a terminal including the broadcast program guiding apparatus 4 via the Internet 3, in the database and sends the read web data to the terminal via the Internet 3. When requesting the web data, the amount of web data can be specified, for example, for a day or for a week.

The EPG data can be obtained by receiving and decoding a signal of the specified channel in the TV set 6.

The EPG data contains a program title, a program type, a broadcast start time, a broadcast end time, the program contents, and a key word (for example, a performer's name, author's name, director's name, series name, song title, area name) every program. The web data also contains the same items as that of the EPG data together with a program table.

The broadcast program guiding apparatus 4, the image recording unit 5, and the TV set 6 are installed on a viewer's side.

The broadcast program guiding apparatus 4 reads the EPG data from the EPG creating unit 1 and the web data from the web server 2, stores the read data as a database, detects a program which matches a viewer's tastes in the database, and displays the detected result on the screen of the TV set 6.

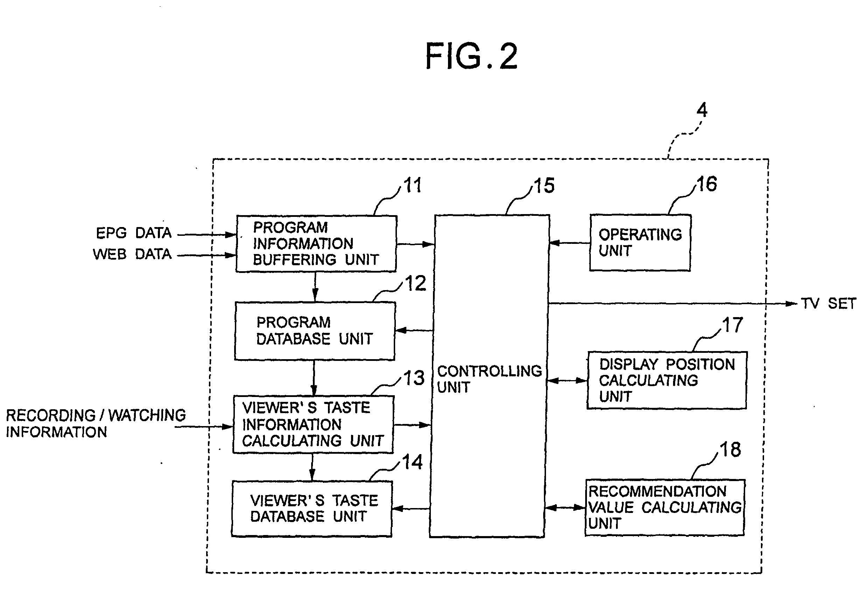

The broadcast program guiding apparatus 4 comprises, as shown in Fig. 2, a program information buffering unit 11, a program database unit 12, a viewer's taste information calculating unit 13, a viewer's taste database unit 14, a controlling unit 15, an operating unit 16, a display position calculating unit 17, and a recommendation value calculating unit 18. The program information buffering unit 11, program database unit 12, viewer's taste information calculating unit 13, viewer's taste database unit 14, operating unit 16, display position calculating unit 17, and recommendation value calculating unit 18 are each connected to the controlling unit 15.

The program information buffering unit 11 is connected to the EPG creating unit 1 via the line 7, and can be connected to the web server 2 via the Internet 3. The program information buffering unit 11 is also connected to the program database unit 12. Data from the buffering unit 11 can be written into the program database unit 12 and data written to the program database unit 12 can be read by the buffering unit 11. The program information buffering unit 11 makes a request for EPG data to the EPG creating unit 1 via the line 7, receives EPG data transmitted from the EPG creating unit 1 in response to the request, and stores the received EPG data in the program database unit 12. In addition, the program information buffering unit 11 makes a request for web data to the web server 2 via the Internet 3, receives web data transmitted from the web server 2 in response to the request, and stores the received web data in the program database unit 12. The EPG data and the web data are written to the program database unit 12 to form a database having program information for each broadcast channel.

When the EPG data or the web data is written to the program database unit 12, a key word which is already used is used as it is as a program key word for showing the feature of a program. Each word contained in the program content of the EPG data and the web data may be made database as a program key word.

The viewer's taste information calculating unit 13 is connected to the program database unit 12 and the viewer's taste database unit 14. The viewer's taste information calculating unit 13 is supplied with watching information from the TV set 6, and is supplied with recording information from the image recording unit 5. The watching information is information relating to programs or channels watched or received by a viewer (user) and a watching period of time for each program or channel. The recording information is information relating to programs recorded by using the image recording unit 5 such as a VCR (video cassette recorder), DVD recorder, hard disc recorder, etc., or channels of the recorded program and the recording periods. The viewer's taste information calculating unit 13 sets viewer's taste information based on the watching information and the recording information. The viewer's taste information calculating unit 13 can specify a program which has been watched or recorded by the viewer based on the watching information and recording information. The viewer's taste information calculating unit 13 extracts the type, person's name, and area name corresponding to the specified program by utilizing the program information stored in the program database unit 12, and an extraction frequency for each detail item of the type, person's name, and area name, in other words, the taste key words is counted. For the type, the type classification of the above-mentioned EPG data is used. The type includes, for example, cinema, sports, music, drama, news, variety, hobby/education, kids, documentary, special, etc. In the case of the type of cinema, sports, music, drama, etc., further classification may be done as follows: cinema may be divided into domestic films and foreign films, sports into each type, and music into classical and jazz. As the person's name, the performer's name, author's name, and director's name in the key words of the EPG data are used. For the area name, too, one of key words in the EPG data is used. Broadcast time may be indicated by showing how often and which type was watched in every time period in one-hour units and counting the frequency according to the type classification of the EPG data. These counted results are updated and stored in the viewer's taste database unit 14 as viewer's taste information (counted values of taste key words and frequency).

The controlling unit 15 controls each component in the broadcast program guiding apparatus 4. The operating unit 16 is provided with various keys by which the viewer inputs commands when the viewer uses the system. Among the various keys, there are a recommendable program display key, a +(plus) shift key, a - (minus) shift key, a future key, and a past key, none of which is shown.

The display position calculating unit 17 calculates a position at which the recommendable program guide reflecting the viewer's tastes in a circular shape is displayed on the screen of the TV set 6. This operation will be described later.

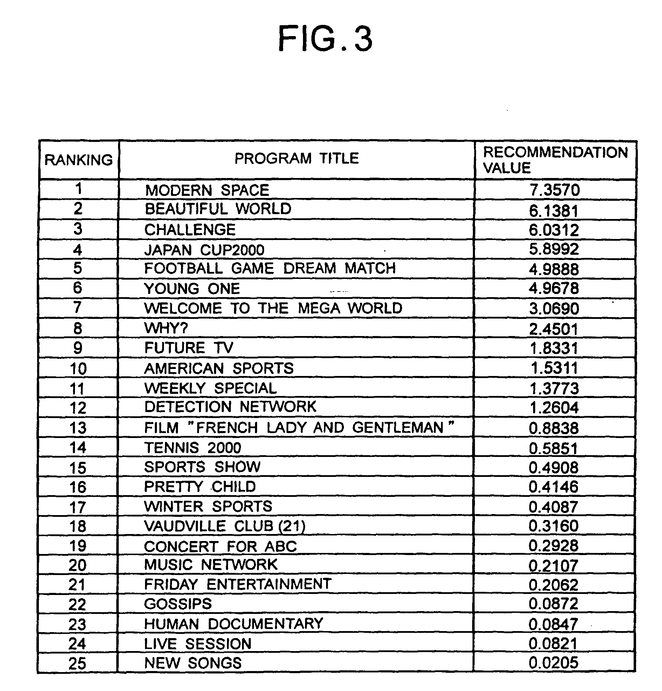

The recommendation value calculating unit 18 calculates a recommendation value by performing a matching calculation according to the viewer's taste information stored in the viewer's taste database unit 14 for each program. The recommendation value is calculated as a point for each program in accordance with the taste key words of the viewer's taste information (for type, person's name, area name) and to the counted values thereof. Assuming that there are program key words PA, PB, PC, PD, PE, PF which indicate the feature of a program, when taste key words LA, LB, LC, and LD coincide or almost coincide with the program key words PA, PC, PE, and PF, respectively, counted values XA, XB, XC, and XD corresponding to the taste key words LA, LB, LC, and LD are totaled up and the totaled value becomes the recommendation value. Fig. 3 shows an example of the calculated result of the recommendation value for each program.

In the system having the configuration as mentioned above, the recommendable program display operation is started by a viewer's operation of a predetermined key (for example, the recommendable program display key) of the operating unit 16.

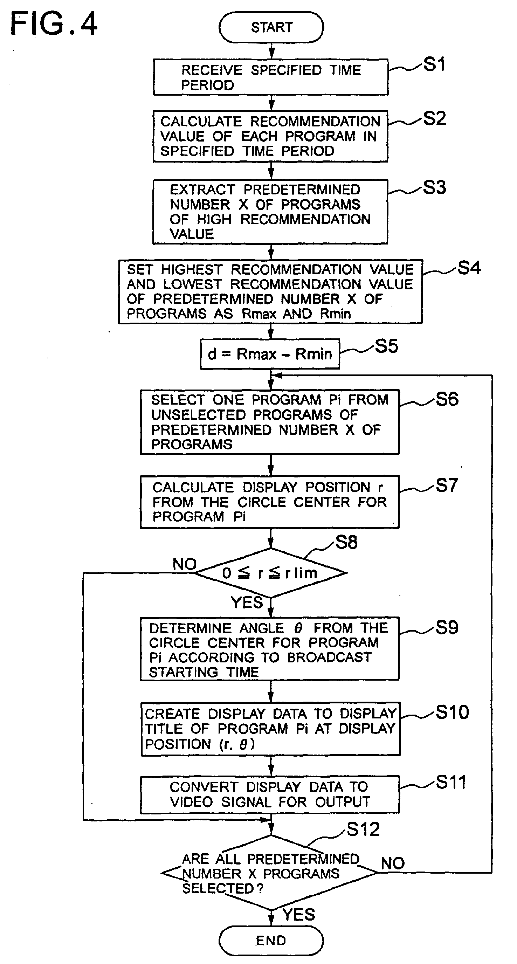

In the recommendable program display operation, as shown in Fig. 4, the controlling unit 15 receives an assignment of a display time period (step S1). This is done by the viewer selecting one display time period the viewer wants for displaying the recommendable program guide of 12-hour display, 24-hour display, and one-week display. The request to select the display time period is displayed on the screen of the TV set 6, and the viewer selects one display time period by key operation. If the 12-hour display is selected, the viewer must next choose between the 12 hours from 6:00 A.M. to 6:00 P.M. or the 12 hours from 6:00 P.M. to 6:00 A.M. In this case, one of them is automatically selected in accordance with the current time. Any 12 hour period may be determined.

When the controlling unit 15 receives a specified display time period, the recommendation value calculating unit 18 calculates the recommendation value for each program in the display time period (step S2). Each program is extracted from the program database unit 12 regardless of broadcast channel, and the recommendation value is calculated for each of all the programs in the specified display time period. The extracted programs include any programs on the air at the current time.

The controlling unit 15 extracts a predetermined number X of programs with high recommendation value based on the recommendation value for each program calculated by the recommendation value calculating unit 18 (step S3). The predetermined number X is determined, for example, in accordance with the time period specified in step S1. The controlling unit 15 uses the display position calculating unit 17 to set the highest value of the recommendation values of the predetermined number X of programs to Rmax, the lowest value thereof to Rmin (step S4), and the difference between the highest value Rmax and the lowest value Rmin to d = Rmax - Rmin (step S5).

An unselected program Pi is selected from the predetermined number X of programs (step S6), and a display position r from the circle center for the program Pi is calculated (step S7). The display position r is calculated as follows:

$$r = - (Ri - Rmax)/d \times Dmax + Sr$$

Ri is the recommendation value of the program Pi, Dmax is the maximum distance from the center, and Sr is the amount of shift. The initial value of the amount of shift Sr is 0.

After the display position r is calculated, whether or not the display position r is 0 or more and at the same time whether it is equal to or less than the display upper limit value rlim is determined (step S8). If r<0 or r>rlim, the operation jumps to step S12, which is described later. If r≤rlim, the display position calculating unit 17 determines an angle θ from the circle center (reference point) with respect to a reference line in accordance with the broadcast start time of the program Pi (step S9). The reference line is, for example, a line in the vertical direction or in the horizontal direction.

When the controlling unit 15 receives the display position (r, θ) for the program Pi calculated by the display position calculating unit 17, it reads the program title of program Pi from the program database unit 12, and creates recommendable program guide display data for displaying the program title at the display position (r, θ) (step S10). The display data is formed of two parts: a program title indicator, which is a circular display pattern corresponding to the display time period specified in step S1, and contains the program title of the program Pi and the current time line, and a program content indicator for displaying the contents of the program whose name is displayed in the program title indicator. The display data for the program content indicator is created as described later. The display data is converted into an analog video signal by a conversion means that is not shown. The video signal is supplied to the TV set 6 (step S11). When the video signal is supplied from the broadcast program guiding apparatus 4 to the TV set 6, a recommendable program guide image corresponding to the video signal is promptly displayed.

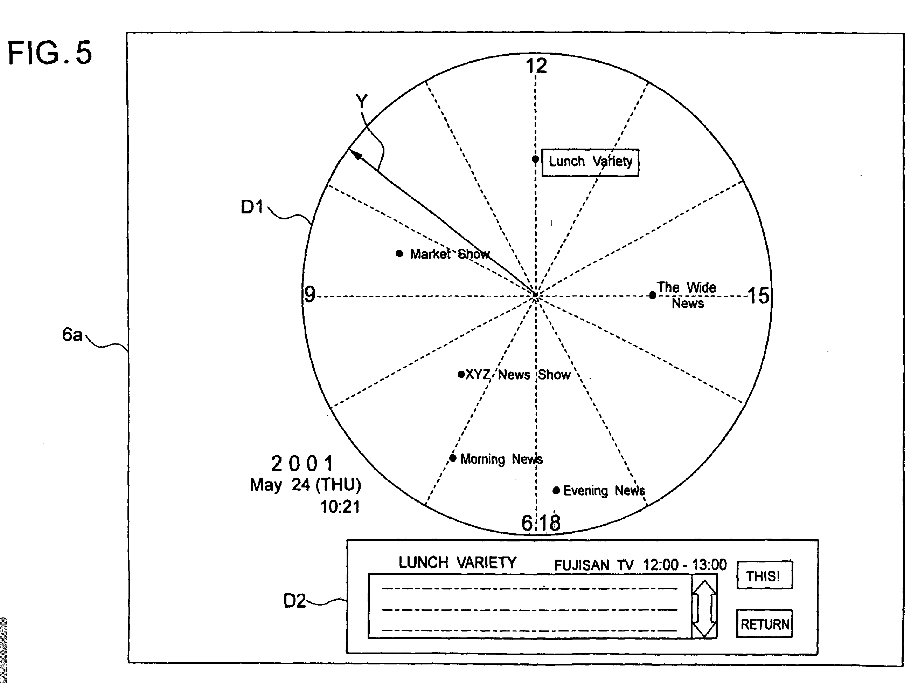

Fig. 5 shows an exemplary display of a recommendable program guide. In Fig. 5, D1 is the program title indicator and D2 is the program content indicator. An arrow Y in the program title indicator D1 points to the current time. A black spot is placed at the starting time of each program. The angular position of each program moves clockwise as time passes. In this exemplary display, a 12-hour display from 6:00 A.M. to 6:00 P.M. is shown on the screen 6a of the TV set 6. The reference line is the 6:00 A.M. line. The nearer to the circle center a program title is displayed, the higher the recommendation value of the program is. The viewer can sense the recommendation value of a program by glancing at the display screen of the recommendable program guide. In this exemplary display, the cursor (square) is placed at the part where the program title 'LUNCH VARIETY' is displayed in the program title indicator D1.

The controlling unit 15 determines whether or not all of the predetermined number X of programs have been selected (step S12). If all of the predetermined number X of programs are not selected, the operation returns to step S6 in order to repeat the above-mentioned operation in the steps S6 to S12. In the creation of display data in step S9, it is repeated to add new program titles to the display pattern to which program titles have been added.

The recommendable program display operation is terminated when all the predetermined number X of programs have been selected.

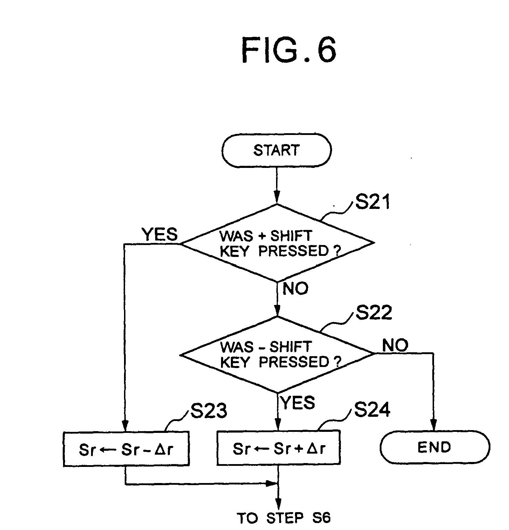

As shown in Fig. 6, the controlling unit 15 determines, for example, whether or not the viewer pressed the + shift key or the - shift key of the operating unit 16 by an interrupt operation (steps S21, S22). If the viewer presses the + shift key of the operating unit 16, the controlling unit 15 decreases the amount of shift Sr by a predetermined value Δr cooperating with the recommendation value calculating unit 18 (step S23). The recommendation value calculating unit 18 executes the above-mentioned recommendable program display operation in the steps after step S6 so as to recreate the display data. On the other hand, if the viewer presses the - shift key of the operating unit 16, the controlling unit 15 increases the amount of shift Sr by the predetermined value Δr in association with the recommendation value calculating unit 18 (step S24). The above-mentioned recommendable program display operation in the steps after step S6 is executed, and the display data is recreated.

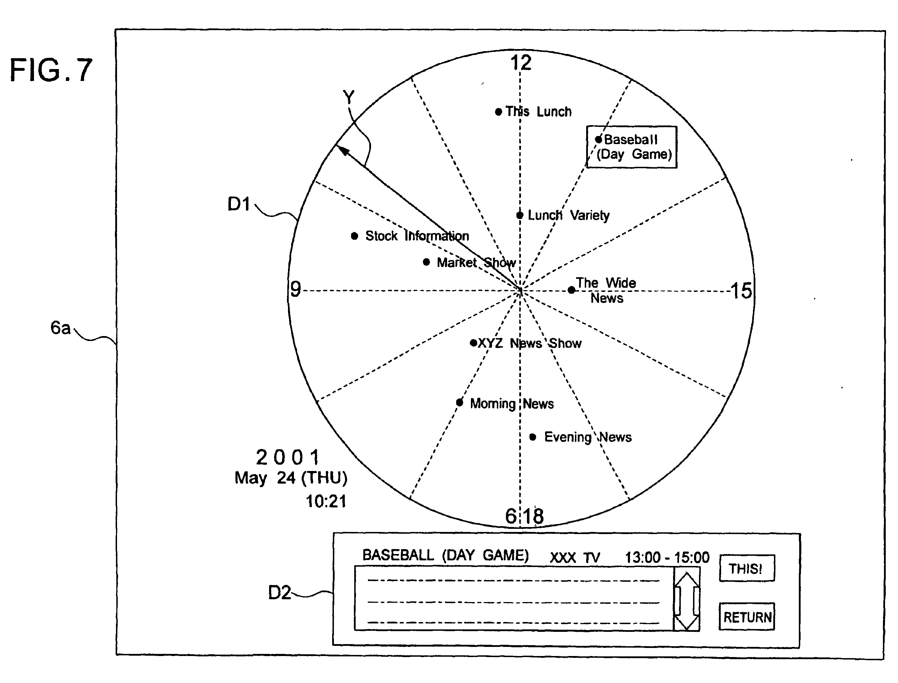

Fig. 7 shows an exemplary display of the recommendable program guide when the + shift key of the operating unit 16 is pressed at the time that the recommendable program guide shown in Fig. 5 is displayed.

There are some operations that are performed but are not shown: the upper limit value and lower limit value are set for the amount of shift Sr; the amount of shift Sr is fixed to the lower limit value when the operation in step S21 causes the amount of shift Sr to be less than the lower limit value; and the amount of shift Sr is fixed to the upper limit value when the operation in step S23 causes the amount of shift Sr to be more than the upper limit value.

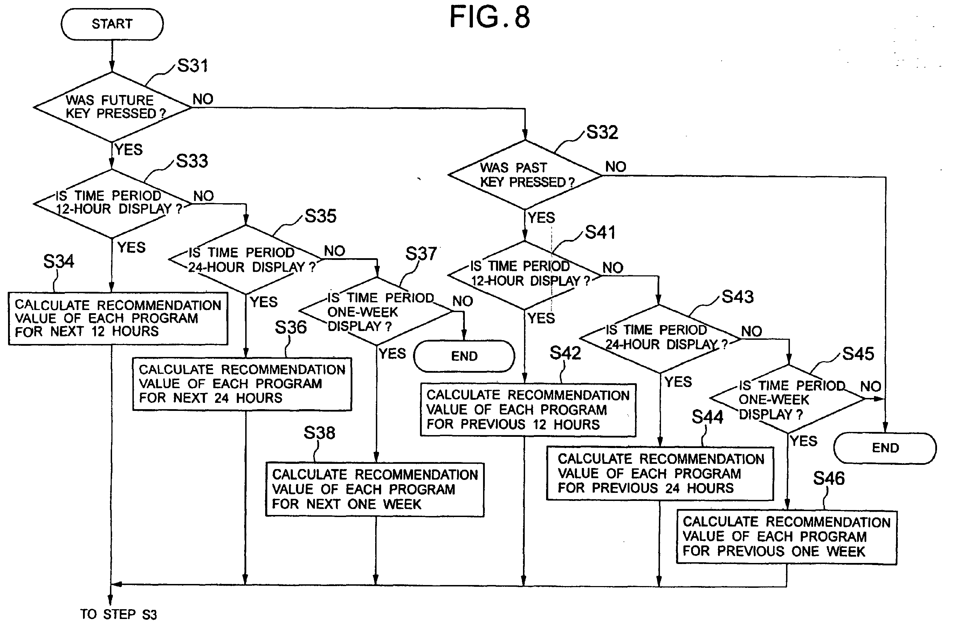

As shown in Fig. 8, the controlling unit 15 determines, for example, whether or not the viewer pressed the future key or the past key of the operating unit 16 by an interrupt operation (steps S31, S32). If the viewer presses the future key of the operating unit 16, the controlling unit 15 determines whether or not the display time period specified in step S1 is 12-hour display (step S33). In the case of 12-hour display, the recommendation value calculating unit 18 calculates the recommendation value corresponding to each program in the next 12 hours after the time period currently being displayed (step S34). If it is not 12-hour display, whether or not the display time period specified in step S1 is 24-hour display is determined (step S35). In the case of 24-hour display, the recommendation value calculating unit 18 calculates the recommendation value corresponding to each program in the next 24 hours after the time period currently being displayed (step S36). If it is not 24-hour display, whether or not the display time period specified in step S1 is one-week display is determined (step S37). In the case of one-week display, the recommendation value calculating unit 18 calculates the recommendation value corresponding to each program in the next one week after the time period currently being displayed (step S38). After the execution of step S34, S36, or S38, the recommendable program display operation in the steps after step S3 is executed. Thus, recommendable program(s) in the next time period after the time period currently being displayed is displayed.

When the viewer presses the past key of the operating unit 16, whether or not the display time period specified in step S1 is 12-hour display is determined (step S41). In the case of 12-hour display, the recommendation value calculating unit 18 calculates the recommendation value corresponding to .. each program in the previous 12 hours before the time period currently being displayed (step S42). If it is not 12-hour display, whether or not the display time period specified in step S1 is 24-hour display is determined (step S43). In the case of 24-hour display, the recommendation value calculating unit 18 calculates the recommendation value corresponding to each program in the previous 24 hours before the time period currently being displayed (step S44). If it is not 24-hour display, whether or not the display time period specified in step S1 is one-week display is determined (step S45). In the case of one-week display, the recommendation value calculating unit 18 calculates the recommendation value corresponding to each program in the previous one week before the time period currently being displayed (step S46). After the execution of step S42, S44 or S46, the steps after step S3 of the recommendable program display operation are executed. Thus, recommendable program(s) in the previous time period before the time period currently being displayed is displayed.

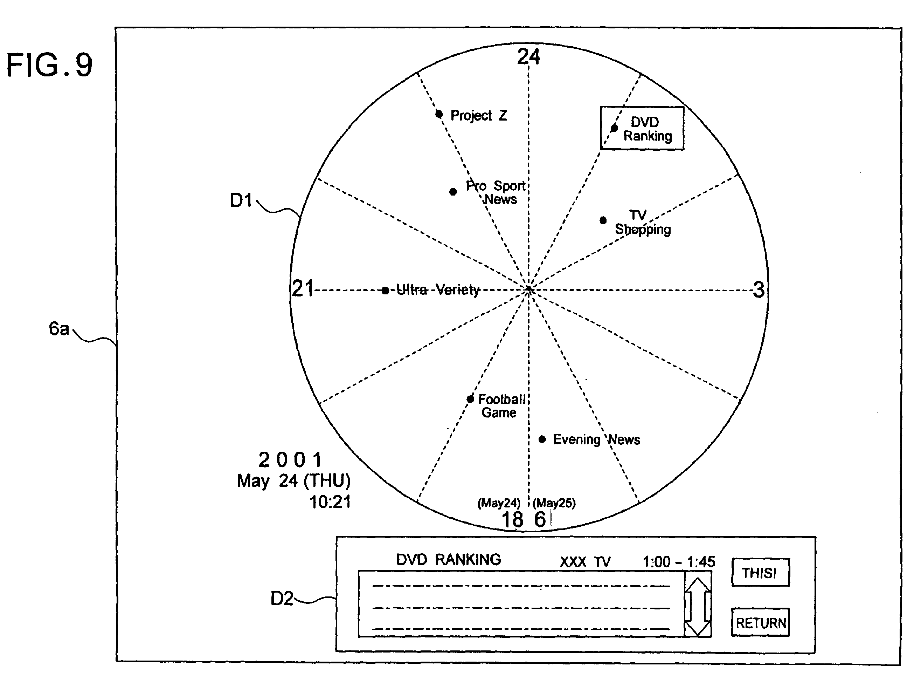

Fig. 9 is an exemplary display of the recommendable program guide when the future key of the operating unit 16 is pressed at the time that the recommendable program guide shown in Fig. 5 is displayed.

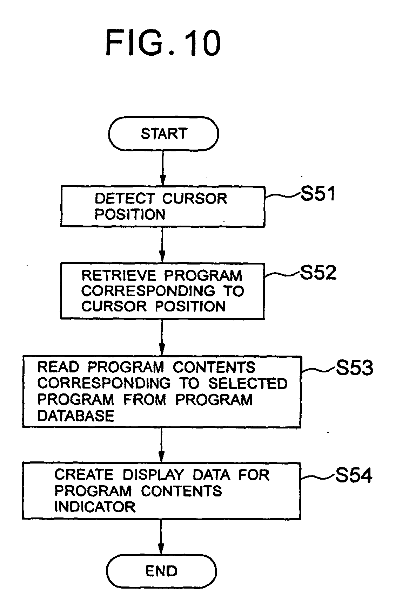

The controlling unit 15 performs the following operation to display the contents of the program content indicator D2 of a recommendable program guide. As shown in Fig. 10, the cursor position is first detected (step S 51). By operating the cursor key (not shown) of the operating unit 16, the viewer can move the cursor freely on the screen displaying the recommendable program guide. When the cursor position is detected, the information about the program corresponding to the cursor position is retrieved (step S52). The viewer can start the retrieval from the display position of each program obtained by the operation of steps S7 to S9 by the display position calculating unit 17. The program information (for example, program contents) stored in the program database 12 corresponding to the selected program is read (step S53), and the display data of the program content indicator D2 is formed(step S54). The display data of the program content indicator D2 formed in step S54 is used for creating the display data of the recommendable program guide in the above-mentioned step S10. By this operation, the contents of the program selected by the cursor are displayed in the program content indicator D2 of the recommendable program guide, as is shown in Figs. 5, 7 and 9.

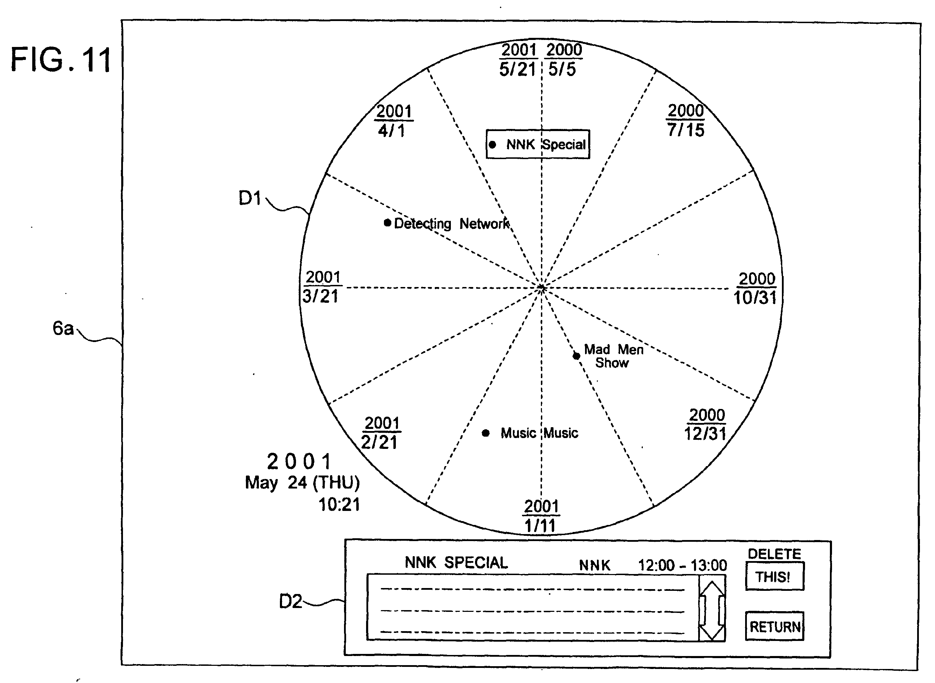

Fig. 11 shows an exemplary application of the system according to the present invention. In this exemplary application, the lower value of recommendation value calculated by the recommendation value calculating unit 18 for programs already broadcast is displayed on the screen showing the recommendable program guide. The viewer can delete the recorded data of the programs from the image recording unit 5 by selecting them from the programs displayed on the screen by cursor operation. When the image recording unit 5 is a hard disk recorder, the image recording capacity of the hard disk recorder can be increased by erasing unnecessary recorded data.

In the case of the above-mentioned embodiments, the viewer is not specified. However, it can be arranged so that, prior to the execution of step S1 of the recommendable program display operation, a viewer ID and a password that specify the viewer are requested. When specifying a viewer, the taste information of each specified viewer can be set and the recommendation value of each program can be calculated based on the taste information. Therefore, a recommendable program guide for each individual viewer can be displayed.

In the above-mentioned embodiments, the display pattern of the recommendable program guide is circular. However, if the program titles are displayed at positions separated from a reference point by distances according to recommendation value and at angles according to the broadcast times with respect to a reference line passing through the reference point of each broadcast program with the reference point as the center, the display pattern may be elliptical or rectangular.

In addition, in the above-mentioned embodiments, the broadcast program guiding apparatus 4, the image recording unit 5, and the TV set 6 are installed on the viewer's side, but the broadcast program guiding apparatus 4 excluding the operating unit 16 may be installed on a broadcasting station side or a server side.

As described above, according to the present invention, a guide for recommendable programs corresponding to the viewer's tastes can be easily indicated.

**Claims**

1. A broadcast program guiding apparatus, comprising:

   program feature storing means (11) for storing program feature information indicating the program features for each broadcast program;
   viewer's tastes detecting means (13) for obtaining history information indicating programs which a viewer has watched or which is recorded by the viewer, and for detecting taste information indicating program selections of the viewer based on the history information; and
   recommendation value setting means (18) for setting a recommendation value for each broadcast program in a predetermined time period in accordance with matching states between the program feature information for each broadcast program stored in said program feature storing means and the taste information detected by said viewer's taste detecting means;
   **characterized in that** said broadcast program guiding apparatus further comprises display data creating means (17) for detecting a position on a screen which is an angular position corresponding to a broadcast time with respect to a reference line passing through a reference point as a center point and which is separated from the reference point by a distance corresponding to said recommendation value for each broadcast program, and for creating display data for displaying a program title at the detected position of each broadcast program.

2. A broadcast program guiding apparatus according to claim 1, wherein said display data creating means (17) has program extracting means (15) for extracting a broadcast program of which the recommendation value set by said recommendation value setting means (18) exits within a predetermined order range, and creates said display data regarding the broadcast program within said predetermined order range extracted by said program extracting means.

3. A broadcast program guiding apparatus according to claim 1, wherein said display data creating means (17) sets the angular position based on the broadcast time by corresponding said predetermined time period to 360 degrees.

4. A broadcast program guiding apparatus according to claim 1, wherein said display data creating means (17) displays a broadcast program having higher recommendation value at a position nearer to said reference point.

5. A broadcast program guiding apparatus according to claim 2, wherein said program extracting means (15) changes said predetermined order range in accordance with an input operation.

6. A broadcast program guiding apparatus according to claim 2, wherein said program extracting means (15) uses as an initial range the predetermined order range from a highest recommendation value of the recommendation values set by said recommendation value setting means.

7. A broadcast program guiding apparatus according to claim 1, further comprising means (16) for specifying said predetermined time period.

8. A broadcast program guiding apparatus according to claim 1, wherein the angular position with respect to said reference point moves clockwise in accordance with passage of time.

9. A broadcast program guiding method, comprising the steps of:

   storing program feature information indicating the program features for each broadcast program;
   obtaining history information indicating programs which a viewer has watched or which is recorded by the viewer, and detecting taste information indicating program selections of the viewer based on the history information; and
   setting a recommendation value for each broadcast program in a predetermined time period in accordance with matching states between the stored program feature information for each broadcast program and the detected taste information;
   **characterized in that** said method further comprises the step (S9 and S10) of detecting a position on a screen which is an angular position corresponding to a broadcast time with respect to a reference line passing through a reference point as a center point and which is separated from the reference point by a distance corresponding to said recommendation value for each broadcast program, and creating display data for displaying a program title at the detected position of each broadcast program.

10. A broadcast program guiding apparatus according to claim 1, wherein the program feature information is transmitted from program information transmitting means (1, 2) which is placed outside of said apparatus, and said program feature storing means (11) receives the program feature information transmitted.

11. A broadcast program guiding apparatus according to claim 1, wherein the history information is stored in history information storing means (5, 6) which is placed outside of said apparatus, and said viewer's tastes detecting means (13) detects the history information from said history information storing means (5, 6).

**Patentansprüche**

1. Rundfunkprogramm-Führungsvorrichtung, umfassend:

Programmmerkmal-Speichermittel zum Speichern von Programmmerkmals-Information, welche die Programmmerkmale für jedes Rundfunkprogramm anzeigen;

Zuschauergeschmacks-Erfassungsmittel zum Erhalten einer Verlaufs-Information, welche Programme anzeigt, welche ein Zuschauer angesehen hat oder welche durch den Zuschauer aufgezeichnet wurden, und zum Erfassen von Geschmacks-Information, welche Programmauswahlen des Zuschauers auf der Grundlage der Verlaufs-Information anzeigt;

Empfehlungswert-Einstellmittel zum Einstellen eines Empfehlungswerts für jedes Rundfunkprogramm in einer vorbestimmten Zeitperiode in Übereinstimmung mit übereinstimmenden Zuständen zwischen Programmmerkmals-Information für jedes Rundfunkprogramm, das in den Programmmerkmals-Speichermitteln gespeichert ist, und der Geschmacks-Information, welche durch das Zuschauergeschmacks-Erfassungsmittel erfasst wurde;

Anzeigedaten-Erzeugungsmittel zum Erfassen einer Position auf einem Schirm, welcher in einer Winkelposition entsprechend einer Rundfunkzeit bezüglich einer Referenzlinie ist, welche durch einen Referenzpunkt als ein Zentrumspunkt verläuft, und welche von dem Referenzpunkt durch eine Distanz entsprechend dem Empfehlungswert für jedes Rundfunkprogramm getrennt ist, und zum Erzeugen von Anzeigedaten zum Anzeigen eines Programmtitels bei der erfassten Position für jede Rundfunkprogramm.

2. Rundfunkprogramm-Führungsvorrichtung gemäß Anspruch 1, wobei das Anzeigedaten-Erzeugungsmittel Programmentnahmemittel zum Entnehmert eines Rundfunkprogramms aufweist, dessen Empfehlungswert, der durch das Empfehlungswert-Einstellmittel eingestellt wurde, innerhalb eines vorbestimmten Ordnungsbereichs vorliegt, und die Display-Daten im Hinblick auf das Rundfunkprogramm innerhalb des vorbestimmten Ordnungsbereichs erzeugt, der durch das Programmentnahmemittel entnommen wurde.

3. Rundfunkprogramm-Führungsvorrichtung gemäß Anspruch 1, wobei das Anzeigedaten-Erzeugungsmittel die Winkelposition auf der Grundlage der Sendezeit durch Anpassen der vorbestimmten Zeitperiode an 360° einstellt.

4. Rundfunkprogramm-Führungsvorrichtung gemäß Anspruch 1, wobei das Anzeigedaten-Erzeugungsmittel (17) ein Rundfunkprogramm mit höherem Empfehlungswert an einer Position näher dem Referenzpunkt anzeigt.

5. Rundfunkprogramm-Führungsvorrichtung gemäß Anspruch 2, wobei das Programmentnahmemittel den vorbestimmten Ordnungsbereich in Übereinstimmung mit einem Eingabevorgang ändert.

6. Rundfunkprogramm-Führungsvorrichtung gemäß Anspruch 2, wobei das Programmentnahmemittel als einen Anfangsbereich den vorbestimmten Ordnungsbereich von einem höchsten Empfehlungswert der Empfehlungswerte verwendet, die durch das Empfehlungswert-Einstellmittel eingestellt sind.

7. Rundfunkprogramm-Führungsvorrichtung gemäß Anspruch 1, des Weiteren umfassend Mittel zur Spezifizierung der vorbestimmten Zeitperiode.

8. Rundfunkprogramm-Führungsvorrichtung gemäß Anspruch 1, wobei sich die Winkelposition bezüglich des Referenzpunkts in Übereinstimmung mit dem Zeitablauf im Uhrzeigersinn bewegt.

**9.** Rundfunkprogramm-Führungsverfahren, umfassend die Schritte:

Speichern von Programmmerkmals-Information, welche die Programmmerkmale für jedes Rundfunkprogramm anzeigen;

Erhalten von Verlaufs-Information, die Programme anzeigt, welche ein Zuschauer angesehen hat oder welche durch den Zuschauer aufgezeichnet wurden, und Erfassen von Geschmacks-Information, die Programmauswahlen des Zuschauers auf der Grundlage der Verlaufs-Information anzeigt; und

Einstellen eines Empfehlungswerts für jedes Rundfunkprogramm in einer vorbestimmten Zeitperiode in Übereinstimmung mit übereinstimmenden Zuständen zwischen der gespeicherten Programmmerkmals-Information für jedes Rundfunkprogramm und der erfassten Geschmacks-Information;

Erfassen einer Position auf einem Bildschirm, welche in einer Winkelposition entsprechend einer Sendezeit bezüglich einer Referenzlinie, die durch einen Referenzpunkt als einen Mittelpunkt verläuft, und welche von dem Referenzpunkt durch einen Abstand entsprechend des Empfehlungswerts für jedes Rundfunkprogramm getrennt ist, und Erzeugen von Anzeigedaten zum Anzeigen eines Programmtitels bei der erfassten Position von jedem Rundfunkprogramm.

**10.** Rundfunkprogramm-Führungsvorrichtung gemäß Anspruch 1, wobei die Programmmerkmals-Information von einem Programm-Informationsübertragungsmittel (1, 2) übertragen wird, welche außerhalb der Vorrichtung angeordnet ist, und wobei das Programmmerkmalsspeichermittel (11) die übertragene Programmmerkmals-Information empfängt.

**11.** Rundfunkprogramm-Führungsvorrichtung gemäß Anspruch 1, wobei die Verlaufs-Information in einem Verlaufs-Informationsspeichermittel (5, 6) gespeichert wird, welches außerhalb der Vorrichtung angeordnet ist, und wobei das Zuschauer-Geschmackserfassungsmittel (13) die Verlaufs-Information von dem Verlaufs-Informationsspeichermittel (5, 6) erfasst.

**Revendications**

**1.** Appareil de guidage d'émission télévisée, comprenant :

des moyens de stockage de caractéristiques d'émission (11) destinés à stocker des informations relatives aux caractéristiques d'émission indiquant les caractéristiques d'émission pour chaque émission télévisée ;

des moyens de détection des goûts des téléspectateurs (13) destinés à obtenir des informations historiques indiquant les émissions qu'un téléspectateur a regardées ou qui sont enregistrées par le téléspectateur, et destinés à détecter des informations relatives aux goûts indiquant les sélections d'émissions du téléspectateur en se basant sur les informations historiques ; et

des moyens de définition de valeur de recommandation (18) destinés à définir une valeur de recommandation pour chaque émission télévisée dans un intervalle de temps prédéterminé selon des états de correspondance entre les informations relatives aux caractéristiques d'émission pour chaque émission télévisée stockées dans lesdits moyens de stockage de caractéristiques d'émission et les informations relatives aux goûts détectées par lesdits moyens de détection des goûts des téléspectateurs ;

**caractérisé en ce que** ledit appareil de guidage d'émission télévisée comprend en outre des moyens de création de données d'affichage (17) destinés à détecter une position sur un écran qui est une position angulaire correspondant à un temps d'antenne par rapport à une ligne de référence passant par un point de référence comme point central et qui est séparée du point de référence par une distance correspondant à ladite valeur de recommandation pour chaque émission télévisée, et destinés à créer des données d'affichage afin d'afficher un titre d'émission au niveau de la position détectée de chaque émission télévisée.

**2.** Appareil de guidage d'émission télévisée selon la revendication 1, dans lequel lesdits moyens de création de données d'affichage sont munis de moyens d'extraction d'émission (15) destinés à extraire une émission télévisée dont la valeur de recommandation définie par lesdits moyens de définition de valeur de recommandation (18) sort d'une gamme d'ordre prédéterminée, et créent lesdites données d'affichage concernant l'émission télévisée à l'intérieure de ladite gamme d'ordre prédéterminée extraite par lesdits moyens d'extraction d'émission.

**3.** Appareil de guidage d'émission télévisée selon la revendication 1, dans lequel lesdits moyens de création de données d'affichage (17) définissent la position angulaire basée sur le temps d'antenne en faisant correspondre ledit intervalle de temps prédéterminé à 360 degrés.

4. Appareil de guidage d'émission télévisée selon la revendication 1, dans lequel lesdits moyens de création de données d'affichage (17) affichent une émission télévisée ayant la plus haute valeur de recommandation au niveau de la position la plus proche dudit point de référence.

5. Appareil de guidage d'émission télévisée selon la revendication 2, dans lequel lesdits moyens d'extraction d'émission (15) modifient ladite gamme d'ordre prédéterminée selon une opération d'entrée.

6. Appareil de guidage d'émission télévisée selon la revendication 2, dans lequel lesdits moyens d'extraction d'émission (15) utilisent comme gamme initiale la gamme d'ordre prédéterminée à partir de la valeur de recommandation la plus élevée parmi les valeurs de recommandation définies par lesdits moyens de définition de valeur de recommandation.

7. Appareil de guidage d'émission télévisée selon la revendication 1, comprenant en outre des moyens (16) destinés à spécifier ledit intervalle de temps prédéterminé.

8. Appareil de guidage d'émission télévisée selon la revendication 1, dans lequel la position angulaire par rapport audit point de référence se déplace dans le sens des aiguilles d'une montre selon l'écoulement du temps.

9. Procédé de guidage d'émission télévisée comprenant les étapes consistant à :

stocker des informations relatives aux caractéristiques d'émission indiquant les caractéristiques d'émission pour chaque émission télévisée ;
obtenir des informations historiques indiquant les émissions qu'un téléspectateur a regardées ou qui sont enregistrées par le téléspectateur, et détecter des informations relatives aux goûts indiquant les sélections d'émissions du téléspectateur en se basant sur les informations historiques ; et
définir une valeur de recommandation pour chaque émission télévisée dans un intervalle de temps prédéterminé selon des états de correspondance entre les informations relatives aux caractéristiques d'émission stockées pour chaque émission télévisée et les informations relatives aux goûts détectées ;
**caractérisé en ce que** ledit procédé comprend en outre l'étape (S9 et S10) consistant à détecter une position sur un écran qui est une position angulaire correspondant à un temps d'antenne par rapport à une ligne de référence passant par un point de référence comme point central et qui est séparée du point de référence par une distance correspondant à ladite valeur de recommandation pour chaque émission télévisée, et créer des données d'affichage afin d'afficher un titre d'émission au niveau de la position détectée de chaque émission télévisée.

10. Appareil de guidage d'émission télévisée selon la revendication 1, dans lequel les informations relatives aux caractéristiques d'émission sont transmises à partir de moyens de transmission d'informations relatives à une émission (1, 2) qui sont placés à l'extérieur dudit appareil, et lesdits moyens de stockage de caractéristiques d'émission (11) reçoivent les informations relatives aux caractéristiques d'émission transmises.

11. Appareil de guidage d'émission télévisée selon la revendication 1, dans lequel les informations historiques sont stockées dans des moyens de stockage d'informations historiques (5, 6) qui sont placés à l'extérieur dudit appareil, et lesdits moyens de détection des goûts des téléspectateurs (13) détectent les informations historiques provenant desdits moyens de stockage d'informations historiques (5, 6).

# FIG.1

# FIG.2

EPG DATA →
WEB DATA →

**11** PROGRAM INFORMATION BUFFERING UNIT

**15** CONTROLLING UNIT

**16** OPERATING UNIT

**12** PROGRAM DATABASE UNIT

→ TV SET

**17** DISPLAY POSITION CALCULATING UNIT

RECORDING / WATCHING INFORMATION →

**13** VIEWER'S TASTE INFORMATION CALCULATING UNIT

**14** VIEWER'S TASTE DATABASE UNIT

**18** RECOMMENDATION VALUE CALCULATING UNIT

**4**

EP 1 304 875 B1

# FIG.3

| RANKING | PROGRAM TITLE | RECOMMENDATION VALUE |
|---|---|---|
| 1 | MODERN SPACE | 7.3570 |
| 2 | BEAUTIFUL WORLD | 6.1381 |
| 3 | CHALLENGE | 6.0312 |
| 4 | JAPAN CUP2000 | 5.8992 |
| 5 | FOOTBALL GAME DREAM MATCH | 4.9888 |
| 6 | YOUNG ONE | 4.9678 |
| 7 | WELCOME TO THE MEGA WORLD | 3.0690 |
| 8 | WHY? | 2.4501 |
| 9 | FUTURE TV | 1.8331 |
| 10 | AMERICAN SPORTS | 1.5311 |
| 11 | WEEKLY SPECIAL | 1.3773 |
| 12 | DETECTION NETWORK | 1.2604 |
| 13 | FILM "FRENCH LADY AND GENTLEMAN" | 0.8838 |
| 14 | TENNIS 2000 | 0.5851 |
| 15 | SPORTS SHOW | 0.4908 |
| 16 | PRETTY CHILD | 0.4146 |
| 17 | WINTER SPORTS | 0.4087 |
| 18 | VAUDVILLE CLUB (21) | 0.3160 |
| 19 | CONCERT FOR ABC | 0.2928 |
| 20 | MUSIC NETWORK | 0.2107 |
| 21 | FRIDAY ENTERTAINMENT | 0.2062 |
| 22 | GOSSIPS | 0.0872 |
| 23 | HUMAN DOCUMENTARY | 0.0847 |
| 24 | LIVE SESSION | 0.0821 |
| 25 | NEW SONGS | 0.0205 |

FIG.4

START

RECEIVE SPECIFIED TIME PERIOD — S1

CALCULATE RECOMMENDATION VALUE OF EACH PROGRAM IN SPECIFIED TIME PERIOD — S2

EXTRACT PREDETERMINED NUMBER X OF PROGRAMS OF HIGH RECOMMENDATION VALUE — S3

SET HIGHEST RECOMMENDATION VALUE AND LOWEST RECOMMENDATION VALUE OF PREDETERMINED NUMBER X OF PROGRAMS AS Rmax AND Rmin — S4

$d = Rmax - Rmin$ — S5

SELECT ONE PROGRAM Pi FROM UNSELECTED PROGRAMS OF PREDETERMINED NUMBER X OF PROGRAMS — S6

CALCULATE DISPLAY POSITION r FROM THE CIRCLE CENTER FOR PROGRAM Pi — S7

S8
$0 \leqq r \leqq r \lim$
NO
YES

DETERMINE ANGLE $\theta$ FROM THE CIRCLE CENTER FOR PROGRAM Pi ACCORDING TO BROADCAST STARTING TIME — S9

CREATE DISPLAY DATA TO DISPLAY TITLE OF PROGRAM Pi AT DISPLAY POSITION $(r, \theta)$ — S10

CONVERT DISPLAY DATA TO VIDEO SIGNAL FOR OUTPUT — S11

S12
ARE ALL PREDETERMINED NUMBER X PROGRAMS SELECTED?
NO
YES

END

14

EP 1 304 875 B1

FIG.5

LUNCH VARIETY     FUJISAN TV 12:00 - 13:00    THIS!

RETURN

# FIG. 6

```
                    ┌─────────────┐
                    │    START    │
                    └──────┬──────┘
                           │
                           ▼            S21
                       ◇─────────◇
        YES           ╱ WAS + SHIFT ╲
    ┌─────────────────  KEY PRESSED ? │
    │                 ╲             ╱
    │                  ◇────┬────◇
    │                       │ NO
    │                       ▼           S22
    │                   ◇─────────◇
    │                  ╱ WAS - SHIFT ╲      NO
    │                 │ KEY PRESSED ?  ─────────────┐
    │                  ╲             ╱              │
    │                   ◇────┬────◇                 │
    │        S23             │ YES      S24         │
    ▼                        ▼                      ▼
┌─────────────┐        ┌─────────────┐        ┌─────────────┐
│ Sr ← Sr - Δr│        │ Sr ← Sr + Δr│        │     END     │
└──────┬──────┘        └──────┬──────┘        └─────────────┘
       │                      │
       └──────────┬───────────┘
                  │
                  ▼
            TO STEP S6
```

# FIG.7

2 0 0 1
May 24 (THU)
10:21

- This Lunch
- Baseball (Day Game)
- Lunch Variety
- Stock Information
- Market Show
- The Wide News
- XYZ News Show
- Morning News
- Evening News

12
9
15
6 18

D1

6a

Y

BASEBALL (DAY GAME)  XXX TV  13:00 - 15:00

THIS!

RETURN

D2

EP 1 304 875 B1

# FIG.8

START

S31 WAS FUTURE KEY PRESSED? — NO
YES

S33 IS TIME PERIOD 12-HOUR DISPLAY? — NO
YES

S34 CALCULATE RECOMMENDATION VALUE OF EACH PROGRAM FOR NEXT 12 HOURS

S35 IS TIME PERIOD 24-HOUR DISPLAY? — NO
YES

S36 CALCULATE RECOMMENDATION VALUE OF EACH PROGRAM FOR NEXT 24 HOURS

S37 IS TIME PERIOD ONE-WEEK DISPLAY? — NO — END
YES

S38 CALCULATE RECOMMENDATION VALUE OF EACH PROGRAM FOR NEXT ONE WEEK

S32 WAS PAST KEY PRESSED? — NO
YES

S41 IS TIME PERIOD 12-HOUR DISPLAY? — NO
YES

CALCULATE RECOMMENDATION VALUE OF EACH PROGRAM FOR PREVIOUS 12 HOURS

S42 S43 IS TIME PERIOD 24-HOUR DISPLAY? — NO
YES

S44 CALCULATE RECOMMENDATION VALUE OF EACH PROGRAM FOR PREVIOUS 24 HOURS

S45 IS TIME PERIOD ONE-WEEK DISPLAY? — NO — END
YES

S46 CALCULATE RECOMMENDATION VALUE OF EACH PROGRAM FOR PREVIOUS ONE WEEK

TO STEP S3

EP 1 304 875 B1

FIG.9

# FIG. 10

```
        ┌─────────────┐
        │    START    │
        └──────┬──────┘
               │
               ▼
   ┌──────────────────────┐
   │  DETECT CURSOR       │───S51
   │  POSITION            │
   └──────────┬───────────┘
              │
              ▼
   ┌──────────────────────┐
   │  RETRIEVE PROGRAM    │───S52
   │  CORRESPONDING TO    │
   │  CURSOR POSITION     │
   └──────────┬───────────┘
              │
              ▼
   ┌──────────────────────┐
   │ READ PROGRAM CONTENTS│───S53
   │ CORRESPONDING TO     │
   │ SELECTED PROGRAM     │
   │ FROM PROGRAM         │
   │ DATABASE             │
   └──────────┬───────────┘
              │
              ▼
   ┌──────────────────────┐
   │ CREATE DISPLAY DATA  │───S54
   │ FOR PROGRAM CONTENTS │
   │ INDICATOR            │
   └──────────┬───────────┘
              │
              ▼
        ┌─────────────┐
        │     END     │
        └─────────────┘
```

FIG.11

2001 2000
5/21 5/5

2001
4/1

2000
7/15

● NNK Special

D1

● Detecting Network

2001
3/21

2000
10/31

6a

Mad Men
Show

2001
2/21

2000
12/31

● Music Music

2001
May 24 (THU)
10:21

2001
1/11

D2

| NNK SPECIAL | NNK | 12:00 – 13:00 | DELETE |
|---|---|---|---|
| | | | THIS! |
| | | | RETURN |

EP 1 304 875 B1